Europäisches Patentamt

European Patent Office

Office européen des brevets

(19)

(11) Publication number: **0 104 958**

**A1**

(12) **EUROPEAN PATENT APPLICATION**

(21) Application number: **83401066.2**

(22) Date of filing: **26.05.83**

(51) Int. Cl.³: **B 01 D 13/00**
**B 29 D 3/02, F 16 J 12/00**

(30) Priority: **05.08.82 US 405504**

(43) Date of publication of application:
**04.04.84 Bulletin 84/14**

(84) Designated Contracting States:
**AT BE CH DE FR GB IT LI LU NL SE**

(71) Applicant: **ALBANY INTERNATIONAL CORP.**
**1 Sage Road**
**Menards New York 12201(US)**

(72) Inventor: **Coplan, Myron J.**
**47 Speen Street**
**Natick, Mass. 01760(US)**

(72) Inventor: **Bilewski, Friedhelm**
**13 Oak Street**
**Medway, Mass. 02050(US)**

(74) Representative: **Moncheny, Michel et al,**
**c/o Cabinet Lavoix 2 Place d'Estienne d'Orves**
**F-75441 Paris Cedex 09(FR)**

(54) **High pressure shell.**

(57) The invention concerns a generally cylindrical pressure-resistant impervious vessel having a polymeric matrix shell reinforced by filaments wherein one or more systems of said filaments are oriented to provide substantial tensile strength reinforcement to the shell in its axial dimension. A feature of the invention is that the axial tensile strength of the pressure shell is contemplated and controlled by the presence of reinforcing filaments generally disposed parallel to or within about 20°, or at least no more than about 45°, to the axis of the shell. Another feature is that these filaments follow continuous unbroken paths for a substantial distance along the shell, then at one end wrappingly engage a rigid ring (42,44) and thereafter return toward their starting position in unbroken paths.

FIG.2

EP 0 104 958 A1

- 1 -

## High pressure shell

The use of membranes to effect separation of gas/gas, liquid/liquid, and liquid/solid mixtures and solutions has achieved general industrial applicability by various methods, among them being ultrafiltration, hyperfiltration, reverse osmosis, dialysis. In general, membrane elements associated with these processes are of six broad types : (1) flat sheets of membrane may be secured against porous plates in assemblies similar to plate-and-frame filter processes ; (2) flat sheets may be wound into spirals interleaved with porous backing materials in jelly-roll fashion ; (3) flat sheets may be pleated or crenulated to provide a measure of self-support ; (4) membranes may be formed as tubes and supported against the inner surface of a rigid porous tubular element ; (5) membranes may be in the form of hollow fibers assembled into header plates with process liquid flowing inside the bores of the fibers or on both the inner and outer surfaces of the hollow fibers as in hemodialysis ; and (6) hollow fibers may be assembled as bundles and used with pressurized fluid applied to the outer surfaces of said hollow fibers.

In several of the above cases, particularly in the instance of spiral wound flat sheets and bundles of hollow fibers pressurized on their outer surfaces, the

- 2 -

membranes assemblies are, in use, installed inside of tubular containers varying in length from about a foot to perhaps 20 feet and in diameter from a few inches up to a few feet. The container is, effectively, an impervious sheel capable of sustaining internal pressures adequate for effecting the membrane separation processes.

In the case of reverse osmosis this pressure is rarely below 100 psi and occasionally reaches 2000 psi. The pressurizable container comprising the cylindrical shell and end-closures, along with the membrane package installed therein, is frequently described as a "module". The end-plates generally provide means for introduction of pressurized feed fluid and outlets for permeate and concentrate streams. The internal configurations are so arranged as to permit the introduction of a feed stream with or without pressure on the upstream face of the membranes, means for collecting permeate which passes through the membranes and emerges on their downstream faces, and means for keeping feed and permeate materials from commingling.

In the field of reverse osmosis therefore and in other relates high-pressure fluid dynamic operations, such as pressure filtration, there is the need for low cost, high strength shells capable of sustaining internal operating pressures in the range of several hundred to a few thousand psi. Conventionally, these shells have been fabricated of suitable metals or plastics, including

- 3 -

filament wound composites of fiberglass and epoxy or the like. For the most part, these latter types have been fabricated by conventional filament winding, although ordinary biaxial braids have also been used as reinforcement.

A difficulty with these conventional filament wound reinforced plastic configurations has been the methods of end closure, sealing, and making connections for pipe fittings. Various configurations have been utilized involving grooves machined into either the internal surface of the external surface of the shell, which afford anchorage sites on the shell for snap rings and the like. Alternatively, sleeves which fit snugly over the outside diameter of the shell have been bonded to their external surfaces with glue in the fashion of a coupling in order to provide a means for end connection. In another alternative, overlap layers of fiberglass windings are applied near the ends of the pressure tubes in order to make a thickness capable of being drilled for bolts, or, in other configurations, bolts or studs have been trapped into extra thick ends during filament winding.

The pressure shell must not only absorb the internal hydraulic forces in the radial direction, but, if longitudinal tie rods are to be avoided, it must also accept axial stresses imposed on the shell. In the conventional designs this leads to two inherent deficiencies. One has to do with the fact that the filament-wound

- 4 -

fibers lie at a helix angle to the axial direction of stress, and unless the helix is rather steep, an excessive amount of winding is required to develop a significant axial component capable of taking up the longitudinal stress in the shell.

Further considerations relate to the problems of end closure and end connections. Each of the alternative methods for creating a closure connection referred to above in the conventional systems relies on the shear strength of the epoxy matrix primarily if not entirely. In some instances this calls for an excessive amount of shell overhang in the case where machined grooves are used for snap rings. In other cases, serious failures have occurred when the glue line between a bonded coupling and the shell has weakened.

The invention to be more fully described is a generally cylindrical pressure-resistant impervious vessel comprising a polymeric matrix shell reinforced by filaments wherein one or more systems of said filaments are oriented to provide substantial tensile strength reinforcement to the shell in its axial dimension. Two essential features are critical to the present invention. The first is that the axial tensile strength of the subject pressure shell is contemplated and controlled by the presence of reinforcing filaments generally disposed parallel to or within about 20°, or at least no more than about 45°, to the axis of the shell. The second feature

- 5 -

is that these generally axially disposed filaments follow continuous unbroken paths for a substantial distance along the shell, then at one end wrappingly engage a rigid ring, and thereafter return toward their starting position in unbroken paths. In one typical situation the path of these filaments continues to the opposite end of the shell where they wrappingly engage a second ring and thereafter reverse direction and follow a continuous unbroken path for a substantial distance along the shell toward the first ring.

The objects of these two features are : (1) to provide substantial tensile strength reinforcement to the shell in its axial direction, and (2) to provide a novel, efficient, safe, effective, and economical arrangement for connecting end-closure means to the pressure shell.

The vessel may rely on an inner liner to provide imperviousness or the polymeric matrix may provide same. At least one system of filaments follows continuous paths which reverse direction at one or both ends of the cylindrical shell in such a way as to engage a ring-like retaining member by enwrapping same at one or each end of the shell.

The filaments which engagingly wrap around said ring-like member(s) may lie substantially parallel to the axis of the cylinder or, alternatively, said engaging filaments may lie with some obliquity to the axis of the shell provided the component of their strength parallel to the axis is adequate to sustain tensile stresses in the axial direction of the shell. In addition to such filaments as are primarily or exclusively oriented to provide tensile reinforcement in the shell axial direction, there may be present one or more systems of filaments following essentially helical paths around the shell to provide strength reinforcement thereto in the hoop direction.

In one embodiment of our invention the reinforcement filaments comprise one or more layers of biaxial braid wherein at least one layer has its yarns lying at an angle less than 45° to the shell axis, preferably less than say, 20°. These steeply pitched braid filaments provide a tensile component of their strength to the shell in its longitudinal direction in proportion to the cosine of this angle, hence the smaller the angle the greater their strength component in the shell axial direction. These steeply pitched filaments wrappingly engage retaining rings at each end of the shell. Additional braid layers of shallow helix and/or other filament overwraps may be employed to provide hoop strength reinforcement to the shell and these latter filaments may or may not engage said rings.

In another embodiment of our invention the reinforcing filaments comprise a woven cloth. One system of filaments in the cloth lies substantially parallel to

- 7 -

the shell axis and wrappingly engages rings at the shell ends. The other system of filaments is wound around the shell in the hoop direction.

In another embodiment, the reinforcing filaments comprise a triaxial braid having filaments lying in both right and left hand helical paths around the shell and a third system of filaments parallel to the axis of the shell. All three systems of filaments make wraps around engaging rings at the shell ends.

In still another embodiment, the braid may be of simple biaxial style and the shell reinforcement in the axial direction may be provided by filaments laid in without interlacing and lying parallel to the shell axis. At least the laid-in axially parallel filaments make path reversals at each end of the cylinder and engage retaining rings thereby.

The principles of these embodiments are illustrated by the drawings.

Fig. 1 is a schematic longitudinal cross-section drawing of a prior art shell ;

Fig. 2 is a schematic longitudinal cross-section drawing of the outer reinforcement structure of a shell constructed in accordance with the subject invention ;

Fig. 3 is a perspective view of a shell constructed in accordance with the subject invention ;

Fig. 4 is a longitudinal sectional view taken along the line 4-4 in the direction of arrows in Fig. 3, and

Fig. 5 is a segmentary view of the triaxial braiding used in the construction of the reinforcement structure of the shell shown in Fig. 3.

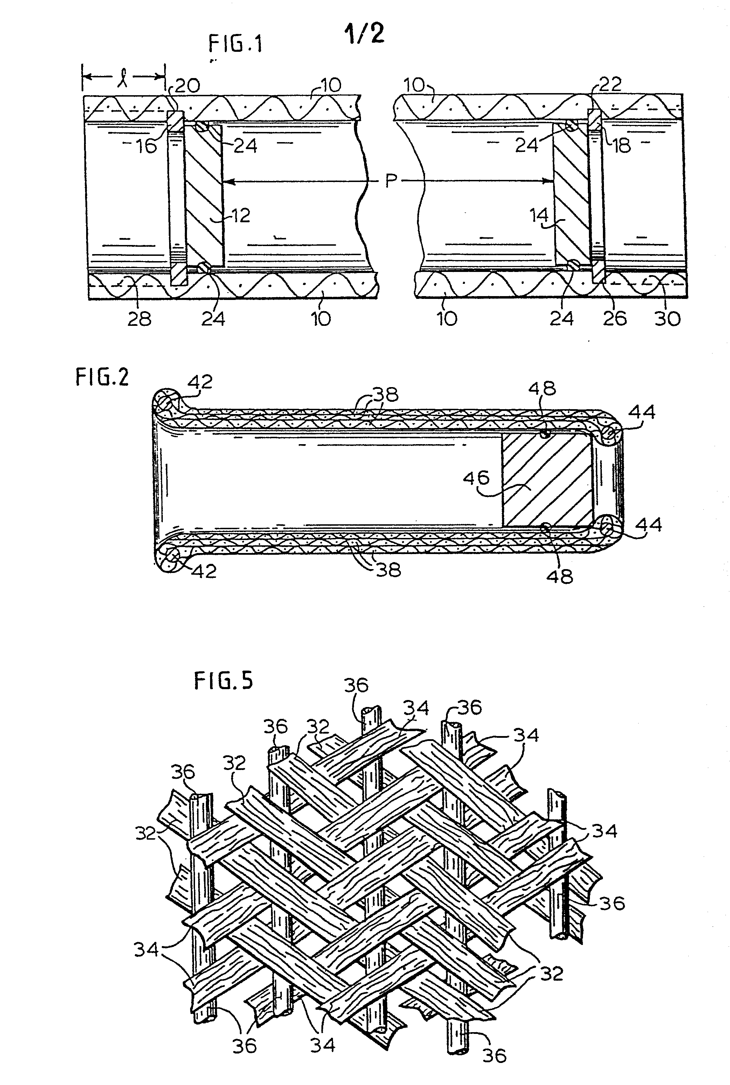

In Fig. 1 a prior art shell for use in high pressure fluid operations is shown in schematic cross-section form in order to illustrate difficulties of end closure and end connection found to exist in the prior art. The shell of Fig. 1 includes a cylindrical outer wall 10 which can be fabricated of filament wound fiberglass reinforced epoxy material, end plates 12 and 14 maintained in position against the internal pressure "P" by snap rings 16 and 18 which are set in respective cylindrical grooves 20 and 22 formed in the inside surface of wall 10. "O"-rings 24 and 26 are shown as typical sealing means.

Broken lines 28 and 80 illustrate the locus of shear failure to which the shell is susceptible.

Internal pressure acting against end plates 12 and 14 is transmitted to retaining rings 16 and 18. These rings, in turn, transmit the load of internal pressurization to the pressure shell wall, and said load generates shear forces in the polymer/fiberglass assembly along the cylindrical plane designated 28 over the length, "1." The general nature of conventional helical oriented filament wound structures is such as to provide poor resistance to failure in shear under the described loading conditions, hence, "1" may be required to be excessively long. In another embodiment of conventional pressure shell

- 9 -

fabrication, cylindrical sleeves may be flued to the outer
surface of main body of the pressure shell adjacent their
ends. End plate connections are made to those cylindrical
sleeves and once again internal pressure forces acting on
the end plates must be taken up in shear, this time in the
glue line bonding the cylindrical sleeves to the outside
of the pressure shell.

Fig. 2 illustrates how the present invention solves
this problem. What is illustrated by this diagrammatic
cross-section is the organization of layers of fabric
having longitudinal filaments making path reversals
around entrapped rings at each end. In this illustration
one such ring has a diameter larger than that of the
shell, and the other is smaller. The reinforcement fabric
is described consisting of triaxial braid, but it should
be understood that other yarn assemblies may be employed
as described agove, provided one system of yarns lies parallel to or only slightly oblique to the cylinder axis
and makes reversals around entrapped retaining rings.
The triaxial braid is, however, our preferred embodiment
since it lends itself to facile fabrication steps.

Triaxial braiding is known and the term triaxial as used
herein contemplates two sets of yarns lying in helical
paths in the sense of a conventional braid, with a third
set of yarns lying entirely parallel to the longitudinal
direction of the shell. This assemblage of three yarn
systems can be achieved on an essentially conventional braider having the faculty for feeding a third set of yarns which are not caused to intertwine by carriers, but rather feed continuously in the longitudinal direction. Such a configuration is illustrated in Fig. 5 wherein yarns indicated by the numerals 32 and 34 are the respective set of yarns referred to above as lying in helical paths and the numeral 36 indicates the third yarn system intended to lie parallel to the longitudinal axis of the shell.

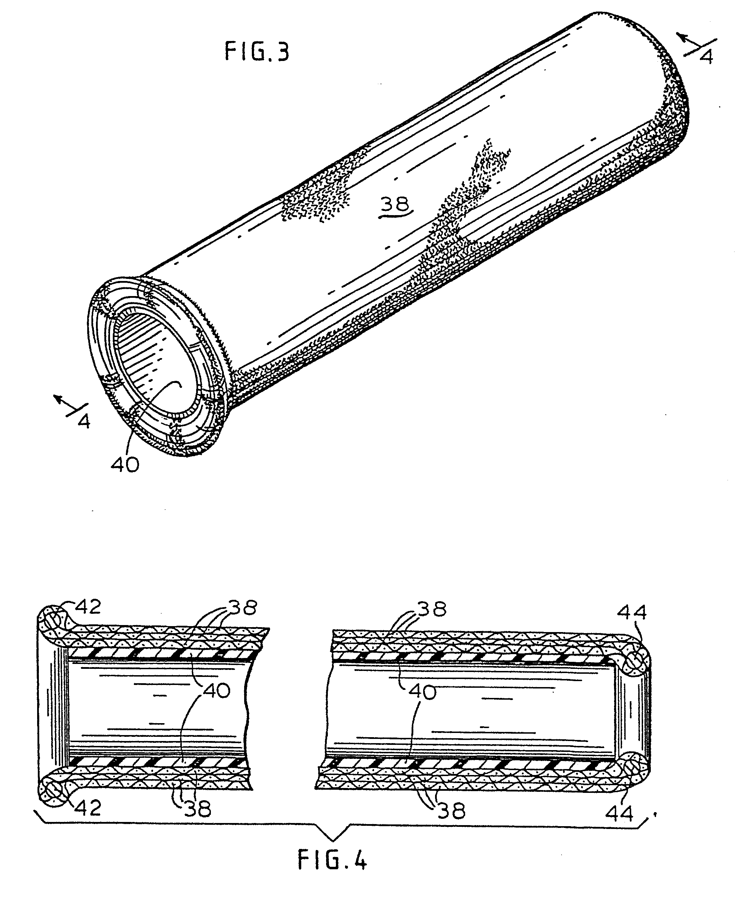

In Figs. 3 and 4 a shell constructed in accordance with this invention is illustrated. The outer structure 38 (or outside shell) is formed of plastic matrix reinforced by triaxial braiding and the inner line can be fabricated of suitable non-reactive materials and it is conceivable that in certain applications the inner shell would not be present but rather the reinforced braiding may be made impervious by suitable impregnation.

The braiding to provide the outside shell 38 may be carried out over a mandrel (not shown) having a single selected diameter or different diameters for different regions of the tube length, or alternatively it may be carried out directly onto the inner line 40. The liner itself may be uniform in inside diameter over its length or have selectively varied inside diameters (and possibly resulting varied outside diameters) over its length, depending upon the specific design.

The invention lends itself to making end closures by braiding the yarn systems 32, 34 and 36 to create the outer structure 38, over rings 42 and 44 as is shown schematically in Fig. 2, or by making other controlled changes in the radial dimension at specified intervals.

In Fig. 2 an end plug 46 with O-ring 48 is shown in position. Also, in Fig. 2 at the flared end where ring 42 lies entrapped in fabric layers, it is possible to make a connection to a closing end plate by means of a clamping ring secured over the ridge formed by the local enlarged diameter.

The important aspect of this invention for the fabrication of end closures is the utilization of filaments lying parallel or within a few degrees of parallel to the cylinder axis so that the longitudinal stress in the shell is taken primarily in the longitudinally oriented yarns. Accordingly, the invention readily lends itself to the provision in such a shell of properly connected end plates or other end fixtures by clamps or in other attachment ways so that end closure pressure loadings are transmitted directly to reinforcing yarns under tension without relying upon shear strength characteristics of composite epoxy or other resin.

0104958

- 12 -

Claims

1. A rigidized filament-reinforced impervious hollow
cylindrical pressure vessel, having filaments in or
adjacent the wall of said vessel lying not more than
45° displaced from parallel to the long axis of the
cylinder, which filaments wrappingly engage rigid rings
positioned at one or both ends of said hollow cylinder.

2. The pressure vessel of Claim 1, wherein one system of filaments lying at an angle less than 45° to the
cylinder long axis follows a continuous path from a
first end of said cylinder to the second end and returns
to said first end after wrappingly engaging a rigid ring
positioned at said second end.

3. The pressure vessel of Claim 1, wherein a first
system of filaments lying at an angle less than 45° to
the cylinder long axis follows a continuous path from
a first end of said cylinder to the second end and returns to said first end after wrappingly engaging a
first rigid ring positioned at said second end, and a
second system of filaments lying at an angle less than
45° to the cylinder long axis follows a continuous path
from the second end of said cylinder to the first end
and returns to said second end after wrappingly engaging a second rigid ring positioned at said first end.

4. The pressure vessel of Claim 1 wherein a system
of filaments lying at an angle less than 45° to the cylinder long axis follows a continuous path from a first end of said cylinder to the second end thereof where it reverses direction to return to said first end where it again reverses direction to follow a path back to the second end, thereby generating three traversals of the cylinder length, and whereby at each cylinder end said filaments wrappingly engage a rigid ring between two of said traversals.

5. The pressure vessel of Claim 1, wherein a second system of filaments is generally oriented between 45° and 90° to the cylinder long axis.

6. The pressure vessel of Claim 2, wherein a second system of filaments is generally oriented between 45° and 90° to the cylinder long axis.

7. The pressure vessel of Claim 3, wherein a second system of filaments is generally oriented between 45° and 90° to the cylinder long axis.

8. The pressure vessel of Claim 4, wherein a second system of filaments is generally oriented between 45° and 90° to the cylinder long axis.

9. The pressure vessel of Claim 5, wherein the filaments are assembled in the form of a triaxial braid.

10. The pressure vessel of Claim 6, wherein the filaments are assembled in the form of a triaxial braid.

11. The pressure vessel of Claim 7, wherein the filaments are assembled in the form of a triaxial braid.

12. The pressure vessel of Claim 8, wherein the filaments are assembled in the form of a triaxial braid.

0104958

1/2

FIG.1

FIG.2

FIG.5

FIG.3

FIG.4

European Patent
Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | DE-B-1 302 834 (HERCULES)<br>* Column 3, lines 12-28, 59-66;<br>figures 2, 3 * | 1-3 | B 01 D 13/00<br>B 29 D 3/02<br>F 16 J 12/00 |
| A | US-A-3 033 730 (W.G. MARTIN)<br>* Figures 3, 4, position 16 * | 1 | |
| A | DE-A-2 035 541 (DYNAMIT NOBEL)<br>* Claims 1, 3; figure 2 * | 1,5-8 | |
| A | DE-A-2 051 247 (UNIROYAL)<br>* Page 6, last line * | 5-8 | |
| A | DE-A-2 408 935 (W.J. WHATLEY)<br>* Claims 1, 2 * | 1,5-8 | |
| | | | TECHNICAL FIELDS SEARCHED (Int. Cl. ³) |
| A | DE-A-2 624 992 (N.V. BEKAERT)<br>* Claims 25-27 * | 9-12 | |
| A | DE-A-2 720 983 (BRUNSWICK)<br>* Claim 12 * | 1,5-8 | B 01 D 13/00<br>B 01 J 3/04<br>B 29 D 3/02<br>F 16 J 12/00 |
| A | DE-A-2 259 949 (VEB<br>PETROLCHEMISCHES KOMBINAT<br>SCHWEDT) * Figure 1 * | | |

The present search report has been drawn up for all claims

| Place of search<br>BERLIN | Date of completion of the search<br>23-11-1983 | Examiner<br>KUEHN P |
|---|---|---|

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO Form 1503. 03.82